# EUROPÄISCHE PATENTSCHRIFT

(11) **EP 2 725 326 B1**
(45) Veröffentlichungstag und Bekanntmachung des Hinweises auf die Patenterteilung: **30.12.2015**
(21) Anmeldenummer: 13189014.7
(22) Anmeldetag: 17.10.2013
(51) Int. Cl.: G01D 11/24, G01D 11/30

(54) **Sensor**
Sensor
Capteur

(30) Priorität: 24.10.2012 DE 102012110167
(43) Veröffentlichungstag der Anmeldung: 30.04.2014
(73) Patentinhaber: SICK AG, 79183 Waldkirch (DE)
(72) Erfinder: Yltchev-Edelmann, Georgy, 79194 Gundelfingen (DE); Bernatzki, Ulrich, 86833 Ettringen (DE)
(74) Vertreter: Ludewigt, Christoph

(56) Entgegenhaltungen:
- DE-A1-102006 020 247
- DE-A1-102008 019 697
- DE-B- 1 247 427
- US-A- 4 137 768

## Beschreibung

Die Erfindung betrifft einen Sensor mit einem Sensorhalter und einem Montagerumpf nach dem Oberbegriff von Anspruch 1.

Beim Einsatz von Sensoren, beispielsweise optischen, optoelektronischen, induktiven oder kapazitiven Sensoren in industriellen Anlagen oder Maschinen ist es erforderlich, dass die Sensoren räumlich genau dort montiert werden, wo es ein Objekt zuverlässig zu detektieren gilt. Zumeist ist es nicht ohne Weiteres möglich, den Sensor an einem bereits vorhandenen Maschinenteil zu befestigen. Daher kommen in vielen Fällen sogenannte Stangenhaltesysteme zum Einsatz. Hierbei wird eine Rundprofilstange über ein Klemmelement an ein Maschinenteil montiert. Am anderen Ende der Rundprofilstange wird ein weiteres Klemmelement und an dieses Klemmelement eine Montageplatte angebracht, die per Schraubverbindung fest mit dem Sensorgehäuse verbunden ist.

Über die Verbindung der beiden Klemmelemente mit der Rundprofilstange sowie mit der Montageplatte ist ein solches Stangenhaltesystem in der Lage, den Sensor individuell auf die richtige Position und Lage auszurichten. Dabei besteht eine große Auswahl an teilweise sogar mehrfach einstellbaren Freiheitsgraden.

Die vielfältigen Möglichkeiten bezüglich der Einstellung und Ausrichtung des Stangenhaltesystems erzeugen jedoch bei der Montage und der Ausrichtung des Sensors einen erheblichen technischen und zeitlichen Aufwand. Dies liegt zum einen an der großen Anzahl von Einzelteilen, nämlich zumindest der Rundprofilstangen, zwei ein- oder mehrteiligen Klemmelementen sowie vier oder mehr Schrauben samt Muttern und Unterlegscheiben zur Klemmung der Klemmelemente, die unter Zuhilfenahme verschiedener Werkzeuge zu dem beschriebenen Stangenhaltesystem zusammengesetzt werden müssen. Zum anderen muss jede einzelne Justagestelle des Stangenhaltesystems ausgerichtet werden, um den Sensor in die gewünschte Position und Lage zu bringen. Besonders wenn eine Vielzahl von Sensoren anzubringen ist, wird der Montage- und Ausrichtaufwand enorm. Aber auch ein Austausch eines Sensors ist aufwändig, denn dafür müssen pro Sensor zumindest zwei Schraubverbindungen gelöst und mit dem neuen Sensor wieder geschlossen werden, wobei anschließend in der Regel zumindest Nachbesserungen der Ausrichtung vorgenommen werden müssen.

Mangels Alternativen kommen die zuvor beschriebenen Stangenhaltesysteme sehr häufig auch dann zum Einsatz, wenn die Anlage, an die der Sensor angebracht werden soll, gar keine besonderen Anforderungen an die Ausrichtbarkeit des Sensors beziehungsweise der Sensorhalterung stellt. Dies ist beispielsweise der Fall, wenn der Sensor in Bezug auf die Achsen des betreffenden Anlagenteils lediglich parallel oder in einem Winkel von 90° ausgerichtet werden muss.

Eine Klemmvorrichtung für die Montage von Sensoren ist aus der DE 199 61 827 A1 bekannt. Sie wird in den beschriebenen herkömmlichen Stangenhaltesystemen eingesetzt und vermag daher die Zahl der Einzelteile und den Montageaufwand nicht zu verringern.

Aus der DE 198 00 553 C2 ist eine optoelektronische Vorrichtung bekannt, bei der das Gehäuse eine von zwei Halbschalen gebildete Aufnahme aufweist, in welcher die aktiven Sensorelemente verdreht werden können. Damit wird zwar die Ausrichtbarkeit in den Drehrichtungen ermöglicht, es fehlt aber an einer Halterung zur Anbringung an einem Maschinenteil oder einem Förderband. Hierfür wäre man erneut auf Zusatzelemente angewiesen, beispielsweise das zuvor beschriebene Stangenhaltesystem.

Die DE 20 2009 017 961 U1 offenbart einen optoelektronischen Sensor mit einem Sensorkopf, der einen Lichtsender und/oder einen Lichtempfänger aufweist, sowie mit einem Montagerumpf, der an seinem einen Ende in eine Aufnahmeeinrichtung für den Sensorkopf übergeht und einen Montagebereich zum Anbringen des Sensors an einem Betriebsort aufweist, dadurch gekennzeichnet, dass die Aufnahmeeinrichtung derart ausgebildet ist, dass der Sensorkopf gegenüber dem Montagerumpf beweglich ist.

Die US 4 137 768 A offenbart eine verstellbare Wärmesonde in einem Schutzrohr.

Die DE 10 2006 020 247 A1 offenbart ein Sensorsystem für ein Getriebe und einen Baukasten von Adapterschrauben für ein Sensorsystem, wobei das Sensorsystem eine Sensoreinheit und eine separate Auswerteeinheit, insbesondere zur Auswertung der Sensorsignale, umfasst, wobei die Sensoreinheit mit einer Adapterschraube dicht und lösbar verbindbar ist.

Die DE 10 2008 019 697 A1 offenbart einen Näherungsschalter zur Bestimmung des Abstandes zwischen diesem und einem sich an diesen annähernden Objekt, mit einem den elektrisch betriebenen Näherungsschalter aufnehmenden Gehäuse und mit mindestens einer elektrischen Leitung, die in das Gehäuse einmündet und durch die der Näherungsschalter mit einer Stromquelle verbunden ist.

Die DE 1 247 427 B offenbart ein Verbindungsteil für zwei im ausgezogenen Zustand miteinander in elektrisch leitender Verbindung stehende Teleskopteile einer Teleskopantenne, bei der diese Teleskopteile gegeneinander isoliert sind und am unteren Ende des herausziehbaren inneren Teleskopteils ein Kontaktstück angebracht ist, wobei das Kontaktstück eine metallische Außenhülse aufweist.

Daher ist Aufgabe der Erfindung, die Montage und Ausrichtung eines Sensors zu vereinfachen. Eine weitere gleichwertige Aufgabe besteht darin, eine Befestigungsmöglichkeit bereitzustellen die hygienetauglich ist und in hygienekritischen Bereichen, beispielsweise der Lebensmittelindustrie oder Pharmaindustrie eingesetzt werden kann. Eine weitere Aufgabe liegt darin, eine einfache, platzsparende und gleichzeitig hygienegerechte Befestigungsmöglichkeit bereitzustellen, wobei eine komfortable und präzise Sensorjustage ermöglicht werden soll.

Die Aufgabe wird gelöst mit einem Sensor gemäß Anspruch 1.

Der Sensorhalter und der Montagerumpf sind dafür ausgebildet, durch teleskopartiges Aus- und Einziehen verstellt zu werden und dass der Sensorhalter gegenüber dem Montagerumpf verdrehbar ist oder der Sensorhalter (44) gegenüber dem Montagerumpf verdrehbar und gegenüber dem Montagerumpf verkippbar ist. Damit lassen sich Freiheitsgrade in einer Abstands- bzw. Höhenrichtung oder einem Drehwinkel oder einem Kippwinkel verstellen. Durch die Klemmelemente wird der Sensorhalter in der gewünschten Position arretiert, da der Sensorhalter durch Kraftschluss zunächst gehalten wird. Jedoch ist der Sensorhalter in dieser Position noch verstellbar. Sobald der Sensorhalter die gewünschte Position erreicht hat, wird die Position mit Hilfe der Überwurfmutter fixiert. Dies geschieht dadurch, dass die Überwurfmutter an der Innenseite ein Innengewinde und eine kegelförmige / kugelförmige o.ä. Innenfläche mit Keilwirkung aufweist. Das Innengewinde greift in das Gewinde der Aufnahmeeinrichtung ein. Durch Drehen der Überwurfmutter in das Gewinde werden die Klemmelemente, die an ihrer Außenseite jeweils eine schräge Fläche aufweisen, die an die kegelförmige Innenfläche der Überwurfmutter angepasst ist, gegen die Außenseite des Sensorhalters gedrückt, wodurch der Sensorhalter in dem Montagerumpf festgeklemmt wird. Der Montagerumpf weist weiter ggf. einen Montagebereich zum Anbringen des Sensors an einem Betriebsort auf. Der Sensorhalter und der Montagerumpf können rohrförmig ausgebildet sein.

Je nach Typ des Sensors kann dieser getrennte oder gemeinsame Sende- und Empfangseinheiten aufweisen, beispielsweise getrennt bei beispielsweise einem optoelektronischen Sensor, beispielsweise bei einer Einweglichtschranke oder gemeinsam wie beispielsweise bei einem Lichttaster. Je nach Ausführung gehört zu dem Sensorgehäuse beispielsweise eine Optik, beispielsweise eine Linse zum Fokussieren eines Sendestrahls oder beispielsweise eine Abbildungsoptik für das Empfangselement, oder Blenden zum Einstellen von Sende- und Empfangskegel. Weiterhin ist bevorzugt auch die erforderliche Sensorelektronik in dem Sensorgehäuse vorzusehen, wie beispielsweise eine Treiberschaltung für den Sender, ein oder mehrere Mikroprozessoren, DSPs (Digital Signal Processor), FPGAs (Field Programmable Gate Array) oder andere Logikbausteine für eine Signalverarbeitung und Auswertung, Bedienelemente und Einlernfunktionen und dergleichen. Schließlich ist eine Schnittstelle vorgesehen, um Sensordaten zu kommunizieren, im Falle einer Lichtschranke oder eines ähnlichen Sensors per Schaltbefehl zu schalten, oder Befehle zu empfangen, wobei diese Schnittstelle über die Aufnahmeeinrichtung geführt wird.

Die Aufnahmeeinrichtung schafft dabei neben ihrer Primärfunktion als mechanische Verbindung zwischen Sensorhalter und Montagerumpf auch optional eine elektrische Verbindung zur Datenkommunikation und/oder Stromversorgung, wobei die entsprechenden Leitungen innen durch den Montagerumpf geführt und an dessen anderem Ende an eine Anlagensteuerung, ein Konfigurationsgerät wie einen Computer oder ein PDA und/oder eine Versorgung angeschlossen sind. Damit werden die Anschlussleitungen für den Sensor vor mechanischer oder sonstiger Beschädigung von dem Montagerumpf geschützt. Weiter wird die Anschlussleitung dicht in dem Montagerumpf geführt, so dass die Anschlussleitung vor Umwelteinflüssen geschützt ist und durch die leicht zu reinigende Ausführung für Anwendungen in sterilen Anlagen geeignet ist. Der übliche Betriebsort für die erfindungsgemäßen Sensoren ist an einer Anlage, einer Maschine oder einem Förderband, wo der Montagebereich beispielsweise an einem Anlagenteil oder in einer Profilschiene angebracht wird.

Weiter weist die Überwurfmutter an einer Öffnung einen ersten Dichtring auf, der am Sensorhalter anliegt, und an der gegenüberliegenden Öffnung einen zweiten Dichtring auf, der am Montagerumpf anliegt. Die Dichtringe sind in eine umlaufende Innennut an den jeweiligen Öffnungen der Überwurfmutter eingelegt. Durch die Dichtringe ist sichergestellt, dass zwischen dem Sensorhalter und dem Montagerumpf eine dichte Verbindung besteht. Die dichtende Verbindung oder Dichtfunktion wird dabei durch den äußeren Rand der Dichtung gebildet, so dass die Dichtwirkung an der Außenkontur vorhanden ist, so dass keine Verunreinigungen oder Reinigungsmittel zwischen Dichtring und Auflagefläche des Dichtrings gelangen können. Die Dichtung durch die Dichtringe ist derart ausgebildet, dass diese auch hohen Druckbelastungen, also beispielsweise einem Dampfstrahl oder Wasserstrahl eines Reinigungsgerätes, standhält. Die Dichtung ist dabei nach den Schutzarten IP65, IP67 oder IP69 gemäß der Norm EN60529 ausgebildet. Die Schutzart IP steht für ,Ingress Protection' also Schutz gegen Eindringen.

Weiter sind die Dichtringe fugenfrei mit der Überwurfmutter verbunden. Dadurch wird verhindert, dass sich zwischen Überwurfmutter und Dichtring Schmutz ablagern kann. Die fugenfreien Oberflächen können einfach gereinigt werden. Durch die fugenfreie Verbindung von Dichtring und Überwurfmutter ist ein Einsatz in hygienekritischen Bereichen, beispielsweise in der Lebensmittel verarbeitenden Industrie oder der Pharmaindustrie möglich.

Weiter ist ein Winkel zwischen einer äußeren Oberfläche des ersten Dichtrings und einer äußeren Oberfläche des Sensorhalters, bzw. einer äußeren Oberfläche des zweiten Dichtrings und einer äußeren Oberfläche des Montagerumpfs, größer als 90° ausgebildet. Durch den stumpfen Winkel zwischen der Dichtung und dem Sensorhalter wird weiter verhindert, dass sich an der Verbindungsstelle zwischen Sensorhalter bzw. dem Montagerumpf und den Dichtringen Schmutz ablagern kann. Weiter wird erreicht, dass Flüssigkeiten, beispielsweise Reinigungsflüssigkeiten besser abfließen. Weiter ist die Reinigungseigenschaft verbessert, wodurch wiederum die Verwendung in hygienekritischen Bereichen verbessert wird.

In Weiterbildung der Erfindung weist die Aufnahmeeinrichtung einen drehbaren Klemmkörper mit mindestens einer teilkugelförmigen Fläche und eine pilzförmige Dichtung auf. Die Überwurfmutter weist ein kegel- oder kugelförmiges Segment auf zur Arretierung des Klemmkörpers. Der Sensorhalter ist verschiebbar in dem Klemmkörper angeordnet. Der Klemmkörper liegt dabei in einem teilkugelförmigen Segment des Montagerumpfs, wodurch der Klemmkörper mit dem Sensorhalter verkippbar und verdrehbar in dem Montagerumpf gelagert ist. Weiter ist der Sensorhalter optional auch verschiebbar und verdrehbar zu dem Montagerumpf. Durch die Überwurfmutter kann der Klemmkörper arretiert werden, so dass der Sensorhalter in einer bestimmten Kippposition fixierbar ist. Der Klemmkörper weist ggf. mehrere Klemmelemente auf, um gleichzeitig eine Klemmung des Sensorhalters gegen Längsverschiebung durch die Vorspannung der Überwurfmutter zu ermöglichen.

Bei einer weiteren vorteilhaften Ausführung sind am Montagerumpf Klemmelemente angebracht, welche den Klemmkörper auch von der Seite der Überwurfmutter umschließen und einen direkten Kontakt zwischen Überwurfmutter und Klemmkörper verhindern. Dadurch kann eine Verdrehung des Klemmkörpers durch die Reibung der festzudrehenden Überwurfmutter verhindert werden.

An dem Klemmkörper ist weiterhin die pilzförmige Dichtung verankert, um eine luft- und/oder wasserdichte Abschirmung vom Montagerumpf, den Sensorhalter oder den Sensor zu ermöglichen. Die Dichtung ist ausgelegt nach den Regeln des Hygienic Design, so dass die Dichtstellen im äußersten Bereich des Pilzschirms der pilzförmigen Dichtung zur Überwurfmutter und im Außenbereich der Sensorhalterdurchführung vorliegen. Die Überwurfmutter weist an der Kontaktstelle zur pilzförmigen Dichtung einen kugelförmigen Flächenabschnitt auf, welcher konzentrisch zu einem Drehpunkt des Klemmkörpers angeordnet ist. Dadurch wird die Dichtfunktion der Pilzdichtung in jeder zulässigen Kippposition gewährleistet. Die pilzförmige Dichtung kann als Zweikomponenten-Spritzteil hergestellt sein, wobei die Oberflächen, welche eine Dichtfunktion erfüllen, aus weicherem Material bestehen.

In Weiterbildung der Erfindung ist der Montagerumpf zusammenhängend und insbesondere einstückig ausgebildet. Der Montagerumpf ist insbesondere fugenfrei ausgebildet, um die Reinigungseigenschaften zu verbessern.

Gemäß einer weiteren bevorzugten Ausführungsform ist der Sensorhalter dafür ausgebildet, das Sensorgehäuse freizugeben und zu fixieren, so dass das Sensorgehäuse austauschbar ist. Dadurch kann der Sensor bzw. das Sensorgehäuse mit dem Sensor beispielsweise bei einem defekten Sensor einfach ausgetauscht werden. Mit Hilfe eines Bajonettverschlusses an dem Sensorhalter kann dann einfach die bisherige Position für den neuen Sensor erneut eingestellt werden. Durch den Bajonettverschluss ist die ursprüngliche Lage des Sensors bzw. des Sensorgehäuses nach einem Austausch wieder herstellbar, ohne dass der Sensor neu ausgerichtet werden muss.

Gemäß einer besonderen Ausführungsform ist der Montagerumpf und/oder der Sensorhalter mehrteilig modular ausgebildet. Dadurch kann der Montagerumpf und/oder der Sensorhalter durch weitere Module an bestimmte Geometrien angepasst werden. So kann der Montagerumpf oder der Sensorhalter verlängert werden oder durch Winkelstücke der Sensor in einer bestimmten Winkelposition angeordnet werden. Der mehrteilig modular aufgebaute Montagerumpf und/oder Sensorhalter können als Baukasten bereitgestellt werden. Dadurch kann mit Hilfe eines oder mehrerer Baukästen eine gewünschte Sensorbefestigung modular gelöst werden.

Der erfindungsgemäße Sensor ist bevorzugt als Einweglichtschranke, Reflexionslichtschranke oder Lichttaster ausgebildet. Dies sind typische Beispiele häufig eingesetzter optoelektronischer Sensoren, bei denen eine Flexibilität oft nur in einem Teil der Freiheitsgrade erforderlich ist, weil standardisierte Anwendungen wie an einem Förderband keine allzu hohen Ansprüche an die Ausrichtung stellen. Grundsätzlich ist aber auch jeder andere Sensortyp denkbar, also auch Sensoren zur Kontrasterkennung, zur Farberkennung, Entfernungsmessung und weitere. Weiter kann der erfindungsgemäße Sensor als induktiver oder kapazitiver Sensor ausgebildet sein.

Die Erfindung wird nachstehend auch hinsichtlich weiterer Vorteile und Merkmale unter Bezugnahme auf die beigefügte Zeichnung anhand von Ausführungsbeispielen erläutert. Die Figuren der Zeichnung zeigen in:
- Figur 1 und Figur 2: jeweils eine Ansicht eines erfindungsgemäßen optoelektronischen Sensors mit Sensorhalter, Montagerumpf und Überwurfmutter;
- Figur 3: eine Schnittdarstellung des erfindungsgemäßen Sensors gemäß Figur 1 entlang einer Schnittlinie gemäß Figur 2;
- Figur 4: eine vergrößerte Darstellung eines Ausschnitts gemäß Figur 3;
- Figur 5: eine Darstellung des Sensors gemäß Figur 1, wobei die Überwurfmutter gelöst ist;
- Figur 6: eine Schnittdarstellung gemäß Figur 5;
- Figur 7: eine vergrößerte Darstellung eines Ausschnitts gemäß Figur 6;
- Figur 8, 9, 11 und 12: jeweils eine Darstellung eines Sensorhalters der, gegenüber dem Montagerumpf verkippbar ist.
- Figur 10: einen Klemmkörper in einer perspektivischen Darstellung.

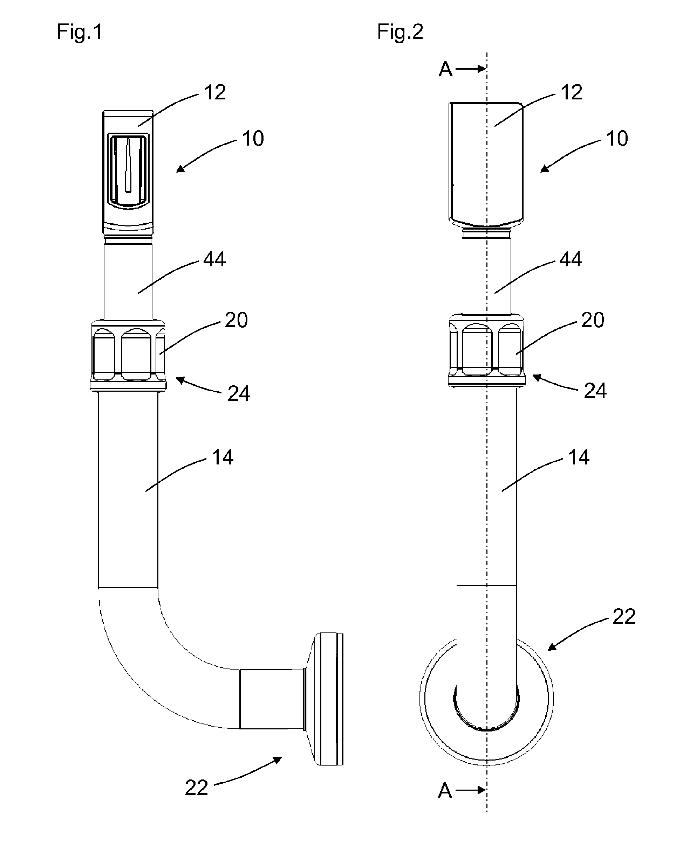

Figur 1 zeigt eine Ausführungsform eines erfindungsgemäßen Sensors 10 mit einem Sensorgehäuse 12, einem Sensorhalter 44, an dem das Sensorgehäuse 12 befestigt ist, sowie mit einem Montagerumpf 14, der an seinem einen Ende eine Aufnahmeeinrichtung 16 für den Sensorhalter 44 aufweist und optional einen Montagebereich 22 zum Anbringen des Sensors 10 an einem Betriebsort aufweist. Der Sensorhalter 44 und der Montagerumpf 14 sind optional rohrförmig ausgebildet. In den Figuren sind gleiche Teile mit gleichen Bezugszeichen bezeichnet.

Das Sensorgehäuse 12 umfasst die für die Funktionalität beispielsweise eines optoelektronischen Sensors 10 erforderlichen Elemente. Der optoelektronische Sensor 10 umfasst einen Lichtsender, der über eine Sendeoptik Licht in einen Überwachungsbereich ausstrahlt, welches dort reflektiert oder remittiert und über eine Empfangsoptik in einem Empfangselement detektiert wird. Das Sensorgehäuse 12 weist für den Lichtein- bzw. Lichtaustritt eine Frontscheibe auf. Eine Steuerung steuert den Lichtsender und verarbeitet die Empfangssignale des Empfangselements. Dieser Aufbau ist nur als Beispiel zu verstehen. Sämtliche denkbaren Formen eines Lichtsenders, wie eine Halogenlampe, ein als LED oder Laserdiode ausgebildetes Halbleiterelement, eines Lichtempfängers als Photodiode bis hin zu einer als CCD- oder CMOS-Chip ausgebildeten Empfangszeile oder Empfangsmatrix, einer Optik, wie dargestellt als einfache Sammellinse und einer Steuerung als Mikroprozessor, als anderer digitaler Logikbaustein oder als analoge Schaltung sind möglich. Entsprechend sind auch andere Anordnungen als gemäß dem beschriebenen Doppelaugenprinzip möglich, beispielsweise eine Autokollimationsanordnung. Schließlich ist auch denkbar, dass nur Sender oder nur Empfänger in dem Sensorgehäuse 12 vorgesehen ist. Der Sensor 10 ist häufig ein einfacher Sensor, etwa eine Einfach- oder Reflexionslichtschranke oder ein Taster, kann aber auch ein anderer optoelektronischer Sensor sein.

Das Sensorgehäuse 12, der Sensorhalter 44, der Montagerumpf 14 und die Überwurfmutter 20 können Materialien wie Edelstahl, Metall oder Kunststoff aufweisen. Mit geeigneten Materialien, beispielsweise Edelstahl oder fluorierten Kunststoffen, ist ein Einsatz in der Lebensmittelindustrie möglich.

Das Sensorgehäuse 12 ist austauschbar, indem die Überwurfmutter 20 an der Aufnahmeeinrichtung an dem Gewinde 24 gelöst wird. Damit kann das Sensorgehäuse 12 des optoelektronischen Sensors 10 zusammen mit dem Sensorhalter 44 problemlos gewartet oder gegen einen intakten beziehungsweise anderen oder moderneren Sensor ausgetauscht werden. Eine teilweise oder vollständige Demontage des Montagerumpfs 14 ist dabei nicht erforderlich. Der Montagerumpf 14 kann auch als standardisierte Montagebasis für verschiedenartige Sensoren ausgebildet sein, in die dann je nach Anwendung ein Sensor mit einer gewünschten Funktionalität eingesetzt wird. Die Anschlussleitungen sind innen in dem Montagerumpf 14 geführt. Die Anschlussleitungen stören damit nicht bei Montage und Betrieb und sind geschützt. Die nach Außen sichtbaren Kanten des Sensorgehäuses 12, des Sensorhalters 44, des Montagerumpfs 14 und insbesondere der Überwurfmutter 20 sind rund ausgebildet, so dass sich kein Schmutz ablagern kann. Insbesondere sind die Griffflächen der Überwurfmutter 20 mit Radien versehen, so dass diese gerundet ausgebildet sind um diese in hygienekritischen Bereichen einsetzen zu können.

Figur 2 zeigt den Sensor gemäß Figur 1 in einer um neunzig Grad gedrehten Ansicht mit gleichen Bezugszeichen.

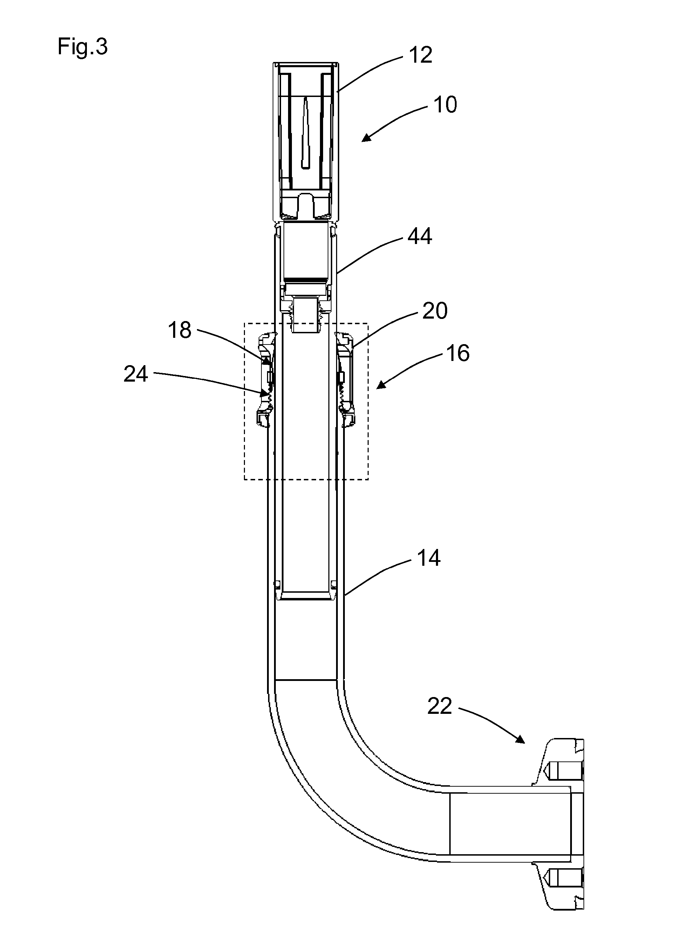

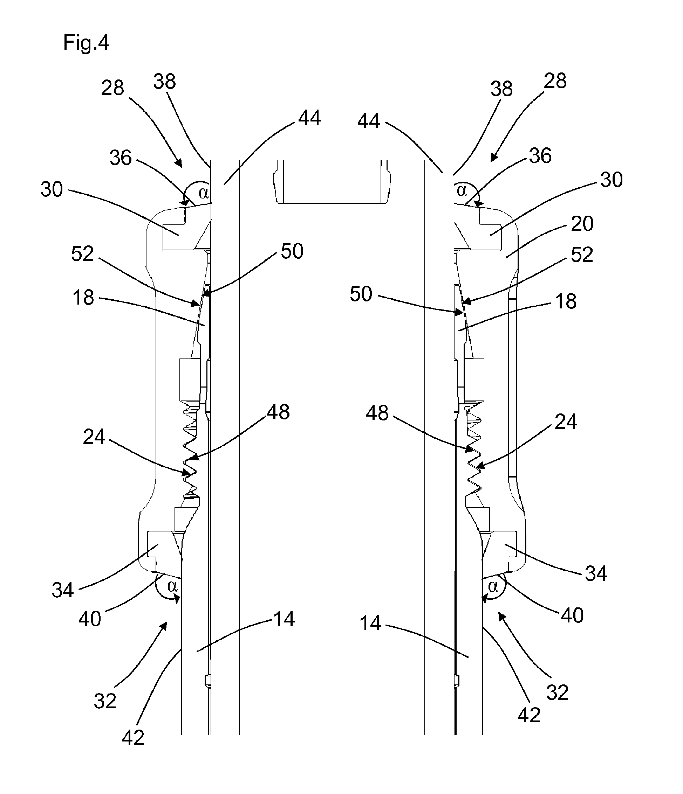

Figur 3 zeigt eine Schnittdarstellung des erfindungsgemäßen Sensors gemäß Figur 1 entlang der Schnittlinie A-A gemäß Figur 2. In Figur 3 ist ein Bereich gestrichelt eingezeichnet, der in Figur 4 vergrößert dargestellt ist. Figur 3 zeigt in der Schnittsdarstellung den rohrförmigen Sensorhalter 44 und den rohrförmigen Montagerumpf 14, die innen hohl sind. Durch diese kann ein nicht dargestelltes Kabel zu dem Sensorgehäuse 12 geführt werden. Der Sensorhalter 44 und der Montagerumpf 14 sind durch die Klemmelemente 18 und die Überwurfmutter 20 miteinander verbunden. Der Montagebereich 22 weist zwei Sacklöcher auf, die zwei Schrauben aufnehmen um den Montagerumpf 14 an einem Betriebsort, beispielsweise an einem Maschinenrahmen, zu befestigen.

Die Aufnahmeeinrichtung 16 ist derart ausgebildet, dass der Sensorhalter 44 gegenüber dem Montagerumpf 14 durch teleskopartiges Aus- und Einziehen verstellbar ist, wobei die Aufnahmeeinrichtung die 16 Klemmelemente 18 für den Sensorhalter 44 aufweist, wobei die Klemmelemente 18 mittels einer Überwurfmutter 20, die in ein Gewinde 24 der Aufnahmeeinrichtung 16 eingreift, festklemmbar sind.

Figur 4 zeigt eine vergrößerte Darstellung eines Ausschnitts gemäß Figur 3 mit der Überwurfmutter 20 und einem Teil des Sensorhalters 44 und einem Teil des Montagerumpfs 14.

Der Sensorhalter 44 und der Montagerumpf 14 sind dafür ausgebildet, durch teleskopartiges Aus- und Einziehen verstellt zu werden oder dass der Sensorhalter 44 gegenüber dem Montagerumpf 14 verdrehbar ist. Damit lassen sich Freiheitsgrade in einer Abstands- bzw. Höhenrichtung oder einem Drehwinkel verstellen. Durch die Klemmelemente 18 wird der Sensorhalter 44 in der gewünschten Position arretiert, da der Sensorhalter 44 durch Kraftschluss zunächst gehalten wird. Jedoch ist der Sensorhalter 44 in dieser Position noch verstellbar. Sobald der Sensorhalter 44 die gewünschte Position erreicht hat, wird die Position mit Hilfe der Überwurfmutter 20 fixiert. Dies geschieht dadurch, dass die Überwurfmutter 20 an der Innenseite ein Innengewinde 48 und eine kegelförmige Innenfläche 50 aufweist. Das Innengewinde 48 greift in das Gewinde 24 der Aufnahmeeinrichtung ein. Durch Drehen der Überwurfmutter 20 in das Gewinde 24 werden die Klemmelemente 18, die an ihrer Außenseite jeweils eine schräge Fläche 52 aufweisen, die an die kegelförmige Innenfläche 50 der Überwurfmutter 20 angepasst ist, gegen die Außenseite des Sensorhalters 44 gedrückt, wodurch der Sensorhalter 44 in dem Montagerumpf 14 festgeklemmt wird.

Die Überwurfmutter 20 weist an einer Öffnung 28 einen ersten Dichtring 30 auf, der am Sensorhalter 44 anliegt, und an der gegenüberliegenden Öffnung 32 einen zweiten Dichtring 34 auf, der am Montagerumpf 14 anliegt. Die Dichtringe 30 und 34 sind in eine umlaufende Innennut an den jeweiligen Öffnungen 28 und 32 der Überwurfmutter 20 eingelegt. Durch die Lagerung in der Innennut werden die Dichtringe 30 und 34 auch bei einer Verschiebung des Sensorhalters sicher in der Überwurfmutter gehalten. Durch die Dichtringe 30 und 34 ist sichergestellt, dass zwischen dem Sensorhalter 44 und dem Montagerumpf 14 eine dichte Verbindung besteht. Die Dichtung durch die Dichtringe 30 und 34 ist derart ausgebildet, dass diese auch hohen Druckbelastungen, also beispielsweise einem Dampfstrahl oder Wasserstrahl eines Reinigungsgerätes, standhält. Die Dichtringe 30 und 34 sind fugenfrei mit der Überwurfmutter 20 verbunden.

Ein Winkel α zwischen einer äußeren Oberfläche 36 des ersten Dichtrings 30 und einer äußeren Oberfläche 38 des Sensorhalters 44, bzw. einer äußeren Oberfläche 40 des zweiten Dichtrings 34 und einer äußeren Oberfläche 42 des Montagerumpfs 14, ist größer als neunzig Grad, also als stumpfer Winkel α ausgebildet. Durch den stumpfen Winkel α zwischen den Dichtringen 30 und 34 und des Sensorhalters 44 wird verhindert, dass sich an der Verbindungsstelle zwischen Sensorhalter 44 bzw. dem Montagerumpf 14 und den Dichtringen 30 und 34 Schmutz ablagern kann.

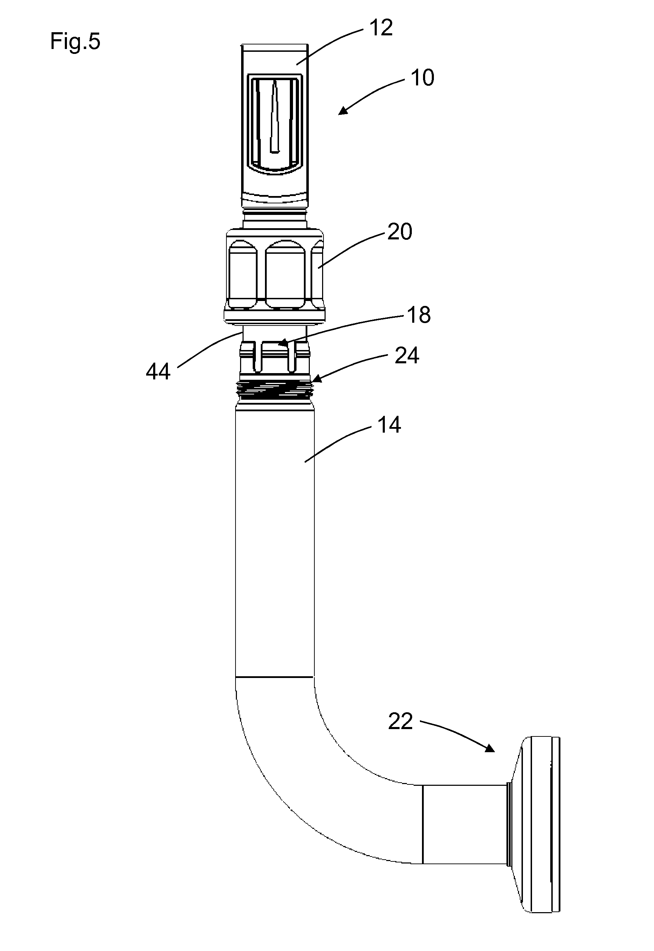

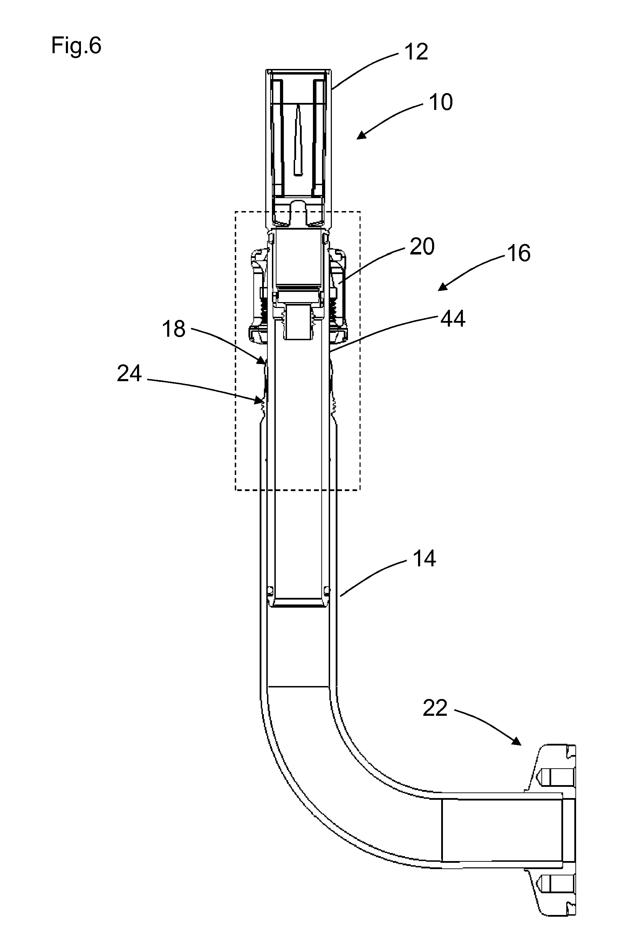

Figur 5 zeigt eine Darstellung des Sensors gemäß Figur 1, wobei die Überwurfmutter gelöst ist. Figur 6 zeigt eine Schnittdarstellung gemäß Figur 5.

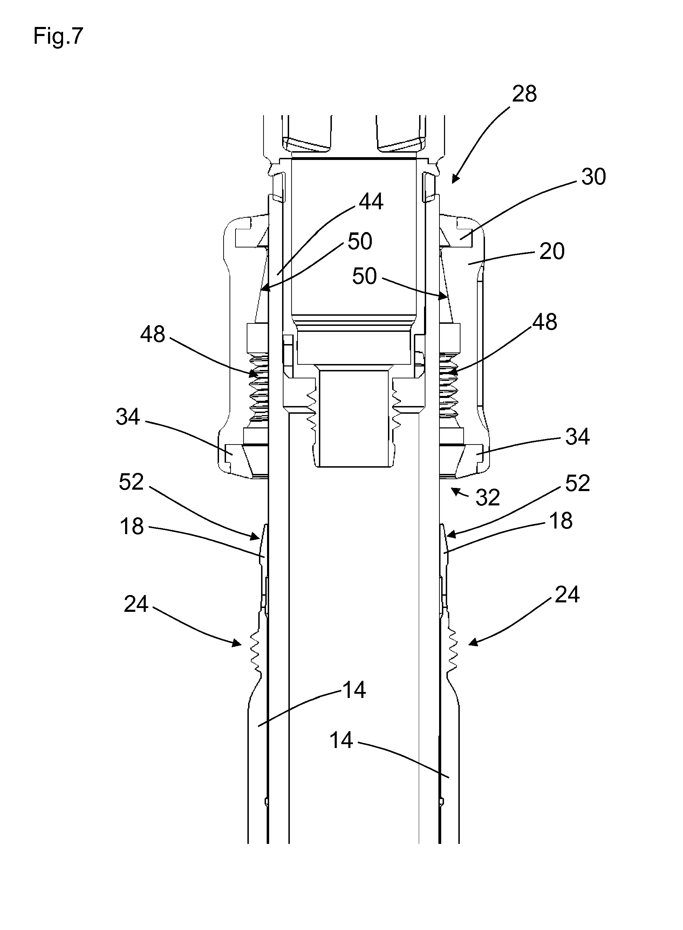

Figur 7 zeigt eine vergrößerte Darstellung eines Ausschnitts gemäß Figur 6 mit den gleichen Teilen wie in Figur 4.

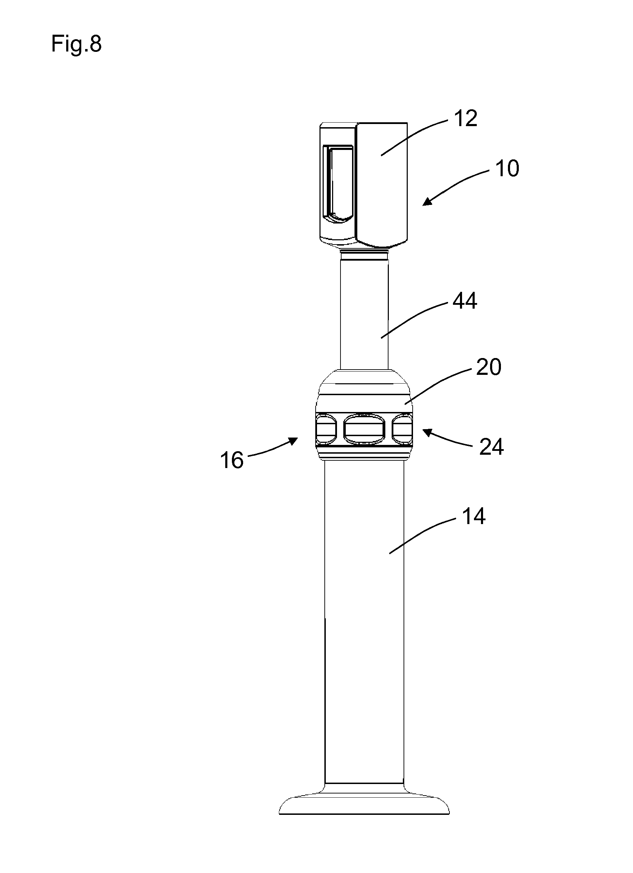

Figur 8 zeigt eine Ausführungsform eines erfindungsgemäßen Sensors 10 mit einem Sensorgehäuse 12, einem Sensorhalter 44, an dem das Sensorgehäuse 12 befestigt ist, sowie mit einem Montagerumpf 14, der an seinem einen Ende eine Aufnahmeeinrichtung 16 für den Sensorhalter 44 aufweist und optional einen Montagebereich zum Anbringen des Sensors 10 an einem Betriebsort aufweist. Der Sensorhalter 44 und der Montagerumpf 14 sind optional rohrförmig ausgebildet.

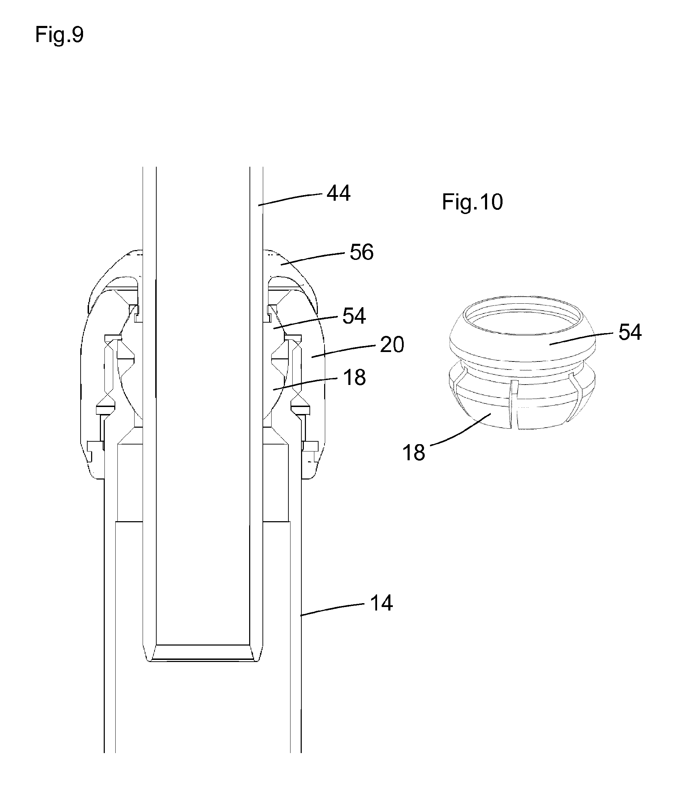

Figur 9 zeigt eine Schnittdarstellung eines Ausschnitts gemäß Figur 8 mit der Überwurfmutter 20 und einem Teil des Sensorhalters 44 und einem Teil des Montagerumpfs 14.

Der Sensorhalter 44 und der Montagerumpf 14 sind dafür ausgebildet, durch teleskopartiges Aus- und Einziehen verstellt zu werden und/oder dass der Sensorhalter 44 gegenüber dem Montagerumpf 14 verdrehbar ist. Weiter ist der Sensorhalter 44 gegenüber dem Montagerumpf 14 verkippbar. Damit lassen sich Freiheitsgrade in einer Abstands- bzw. Höhenrichtung oder einem Drehwinkel oder einem Kippwinkel verstellen. Durch die Klemmelemente 18 des Klemmkörpers 54 wird der Sensorhalter 44 in der gewünschten Position arretiert, da der Sensorhalter 44 durch Kraftschluss zunächst gehalten wird. Jedoch ist der Sensorhalter 44 in dieser Position noch verstellbar. Sobald der Sensorhalter 44 die gewünschte Position erreicht hat, wird die Position mit Hilfe der Überwurfmutter 20 fixiert.

Die Überwurfmutter 20 weist ein teilkugelförmiges Segment auf zur Aufnahme eines Klemmkörpers 54. Der Sensorhalter 44 ist verschiebbar in dem Klemmkörper 54 angeordnet. Der Klemmkörper 54 liegt dabei in einem teilkugelförmigen Segment des Montagerumpfs 14, wodurch der Klemmkörper 54 mit dem Sensorhalter 44 verkippbar in dem Montagerumpf 14 gelagert ist. Weiter ist der Sensorhalter 44 auch verschiebbar und verdrehbar zu dem Montagerumpf 14. Durch die Überwurfmutter 20 kann der Klemmkörper 54 arretiert werden, so dass der Sensorhalter 44 in einer bestimmten Kippposition fixierbar ist.

Der Klemmkörper 54 ist in Figur 10 perspektivisch dargestellt. Der Klemmkörper 54 weist an der Seite, welche im Montagerumpf 14 anliegt, Schlitze auf, wodurch die Klemmelemente 18 gebildet sind, um eine Klemmung durch die Überwurfmutter 20 zu ermöglichen. An der Seite, welche an der Überwurfmutter 20 anliegt, sind keine Schlitze vorgesehen, um eine dichte Schnittstelle zwischen Überwurfmutter 20 und Klemmkörper 54 und zwischen Sensorhalter 44 und Klemmkörper 54 zu bilden. An dem Klemmkörper 54 ist weiterhin eine pilzförmige Dichtung 56 verankert, um zu verhindern, dass Flüssigkeit oder Schmutz in den Montagerumpf 14, den Sensorhalter 44 oder den Sensor 12 eindringen kann.

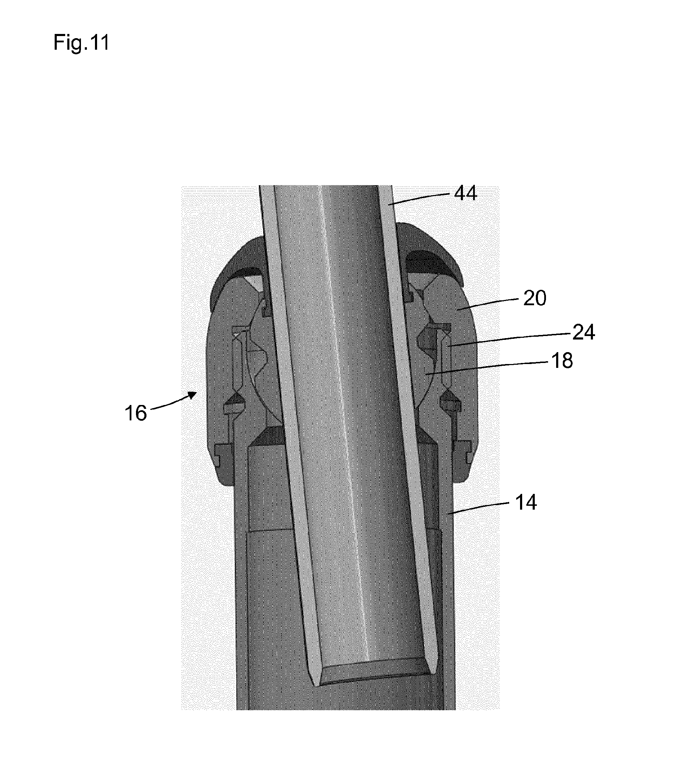

Figur 11 zeigt einen Sensorhalter 44, an dem das Sensorgehäuse befestigt ist, sowie den Montagerumpf 14, der an seinem einen Ende eine Aufnahmeeinrichtung 16 für den Sensorhalter 44 aufweist, wobei die Aufnahmeeinrichtung 16 derart ausgebildet ist, dass der Sensorhalter 44 gegenüber dem Montagerumpf 14 verdrehbar und/oder durch teleskopartiges Aus- und Einziehen verstellbar und/oder gegenüber dem Montagerumpf 14 verkippbar ist, wobei die Aufnahmeeinrichtung 16 Klemmelemente 18 für den Sensorhalter 44 aufweist, wobei die Klemmelemente 18 mittels einer Überwurfmutter 20, die in ein Gewinde 24 der Aufnahmeeinrichtung 16 eingreift, festklemmbar sind.

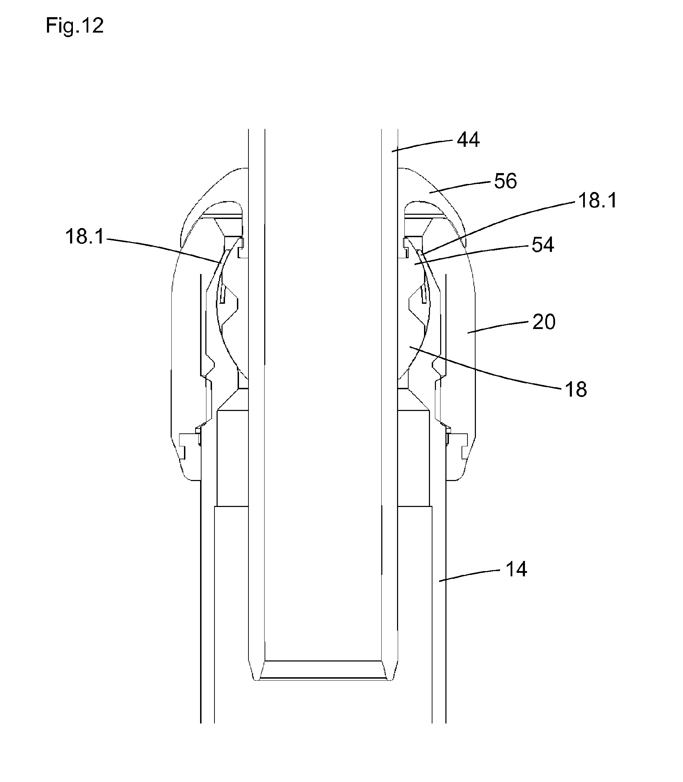

Figur 12 zeigt einen Sensorhalter 44 und einen Montagerumpf 14. Der Montagerumpf 14 weist Klemmelemente 18.1 auf, welche den Klemmkörper 54 auch von der Seite der Überwurfmutter 20 umschließen und einen direkten Kontakt zwischen Überwurfmutter 20 und Klemmkörper 54 verhindern. Die Klemmelemente 18.1 liegen zwischen dem Klemmkörper 54 und der Überwurfmutter 20. Dadurch kann eine Verdrehung des Klemmkörpers 54 durch die Reibung der festzudrehenden Überwurfmutter 20 verhindert werden.

### Bezugszeichen:

- 10: Optoelektronischer Sensor
- 12: Sensorgehäuse
- 14: Montagerumpf
- 16: Aufnahmeeinrichtung
- 18: Klemmelemente
- 20: Überwurfmutter
- 22: Montagebereich
- 24: Gewinde
- 28: Öffnung
- 30: erster Dichtring
- 32: gegenüberliegende Öffnung
- 34: zweiter Dichtring
- 36: äußere Oberfläche
- 38: äußere Oberfläche
- 40: äußere Oberfläche
- 42: äußere Oberfläche
- 44: Sensorhalter
- 48: Innengewinde
- 50: kegelförmige Innenfläche
- 52: schräge Fläche
- 54: Klemmkörper
- 56: pilzförmige Dichtung
- α: Winkel

## Patentansprüche

1. Sensor mit einem Sensorgehäuse (12), einem Sensorhalter (44), an dem das Sensorgehäuse befestigt ist, sowie mit einem Montagerumpf (14), der an seinem einen Ende eine Aufnahmeeinrichtung (16) für den Sensorhalter (44) aufweist, wobei Anschlussleitungen für den Sensor innen in dem Montagerumpf geführt sind, wobei die Aufnahmeeinrichtung (16) derart ausgebildet ist, dass der Sensorhalter (44) gegenüber dem Montagerumpf (14) verdrehbar und durch teleskopartiges Aus- und Einziehen verstellbar ist oder der Sensorhalter (44) gegenüber dem Montagerumpf verdrehbar und gegenüber dem Montagerumpf verkippbar ist,
wobei die Aufnahmeeinrichtung (16) Klemmelemente (18) für den Sensorhalter (44) aufweist, wobei die Klemmelemente (18) mittels einer Überwurfmutter (20), die in ein Gewinde (24) der Aufnahmeeinrichtung (16) eingreift, festklemmbar sind, **dadurch gekennzeichnet,**
**dass** die Überwurfmutter (20) an einer Öffnung (28) einen ersten Dichtring (30) aufweist, der am Sensorhalter (44) anliegt und an der gegenüberliegenden Öffnung (32) einen zweiten Dichtring (34) aufweist, der am Montagerumpf (14) anliegt, wobei die äußere Oberfläche der Dichtringe (30, 34) mit der äußeren Oberfläche der Überwurfmutter (20) jeweils fugenfrei verbunden ist und ein Winkel (α) zwischen einer äußeren Oberfläche (36) des ersten Dichtrings (30) und einer äußeren Oberfläche (38) des Sensorhalters (44), bzw. einer äußeren Oberfläche (40) des zweiten Dichtrings (34) und einer äußeren Oberfläche (42) des Montagerumpfs (14), größer als 90° ausgebildet ist.

2. Sensor nach Anspruch 1, **dadurch gekennzeichnet, dass** die Aufnahmeeinrichtung einen drehbaren Klemmkörper (54) mit mindestens einer teilkugelförmigen Fläche und eine pilzförmige Dichtung (56) aufweist.

3. Sensor nach einem der vorhergehenden Ansprüche,
**dadurch gekennzeichnet, dass** der Montagerumpf (14) zusammenhängend und insbesondere einstückig ausgebildet ist.

4. Sensor nach einem der vorhergehenden Ansprüche,
**dadurch gekennzeichnet, dass** der Sensorhalter (44) dafür ausgebildet ist, das Sensorgehäuse (12) freizugeben und zu fixieren, so dass das Sensorgehäuse (12) austauschbar ist.

5. Sensor nach einem der vorhergehenden Ansprüche, **dadurch gekennzeichnet, dass** der Sensorhalter (44) einen Bajonettverschluss aufweist zur Aufnahme des Sensorgehäuses (12).

6. Sensor nach einem der vorhergehenden Ansprüche 1 bis 2 oder 4 bis 5,
**dadurch gekennzeichnet, dass** der Montagerumpf (14) und/oder der Sensorhalter (44) mehrteilig modular ausgebildet sind.

7. Sensor nach einem der vorhergehenden Ansprüche, **dadurch gekennzeichnet, dass** der Sensor als Einweglichtschranke, Reflexionslichtschranke oder Lichttaster ausgebildet ist.

## Claims

1. A sensor having a sensor housing (12), having a sensor holder (44) to which the sensor housing is fastened, and having an installation body (14) which has a receiver device (16) for the sensor holder (44) at its one end, wherein connector lines for the sensor are guided at the interior in the installation body, wherein the receiver device (16) is configured such that the sensor holder (44) is rotatable with respect to the installation body (14) and is adjustable by a telescopic extension and retraction or the sensor holder (44) is rotatable with respect to the installation body and tiltable with respect to the installation body,
wherein the receiver device (16) has clamping elements (18) for the sensor holder (44), wherein the clamping elements (18) can be clamped tight by means of a cap nut (20) which engages into a thread (24) of the receiver device (16),
**characterized in that**
the cap nut (20) has a first sealing ring (30) at an opening (28), said first sealing ring contacting the sensor holder (44), and has a second sealing ring (34) at the oppositely disposed opening (32), said second sealing ring contacting the installation body (14), wherein the outer surfaces of the sealing rings (30, 34) are respectively connected without joins to the outer surfaces of the cap nut (20) and an angle (α) greater than 90° is formed between an outer surface (36) of the first sealing ring (30) and an outer surface (38) of the sensor holder (44) or between an outer surface (40) of the second sealing ring (34) and an outer surface (42) of the installation body (14).

2. A sensor in accordance with claim 1, **characterized in that** the receiver device has a rotatable clamping body (54) having at least one partly spherical surface and one mushroom-shaped seal (56).

3. A sensor in accordance with one of the preceding claims, **characterized in that** the installation body (14) is coherent and is in particular in one piece.

4. A sensor in accordance with any one of the preceding claims, **characterized in that** the sensor holder (44) is configured to release and to fix the sensor housing (12) so that the sensor housing (12) can be replaced.

5. A sensor in accordance with any one of the preceding claims, **characterized in that** the sensor holder (44) has a bayonet connection for receiving the sensor housing (12).

6. A sensor in accordance with any one of the preceding claims 1, 2 or 4 to 5, **characterized in that** the installation body (14) and/or the sensor holder (44) is/are configured in multipart modular form.

7. A sensor in accordance with any one of the preceding claims, **characterized in that** the sensor is configured as a through beam light barrier, a reflection light barrier or a light scanner.

## Revendications

1. Capteur comprenant un boîtier de capteur (12), un porte-capteur (44) sur lequel est fixé le boîtier de capteur, et un tronc de montage (14) qui comporte à une extrémité un dispositif récepteur (16) pour le porte-capteur (44), dans lequel des lignes de raccordement pour le capteur sont guidées à l'intérieur dans le tronc de montage, dans lequel le dispositif récepteur (16) est réalisé de telle manière que le porte-capteur (44) est capable d'être tourné par rapport au tronc de montage (14) et déplaçable par extraction et rétraction de manière télescopique, ou bien le porte-capteur (44) est capable de tourner par rapport au tronc de montage et capable de basculer par rapport au tronc de montage,
dans lequel le dispositif récepteur (16) comprend des éléments de serrage (18) pour le porte-capteur (44), lesdits éléments de serrage (18) étant susceptibles d'être fermement serrés au moyen d'un écrou-coiffe (20), qui s'engage dans un pas de vis (24) du dispositif récepteur (16), **caractérisé en ce que**
l'écrou-coiffe (20) comporte au niveau d'une ouverture (28) une première bague d'étanchéité (30) qui s'applique contre le porte-capteur (44) et qui comporte au niveau de l'ouverture opposée (32) une seconde bague d'étanchéité (34) qui s'applique contre le tronc de montage (14), dans lequel la surface extérieure des bagues d'étanchéité (30, 34) est reliée respectivement sans jointure à la surface extérieure de l'écrou-coiffe (20) et un angle (α) entre une surface extérieure (36) de la première bague d'étanchéité (30) et une surface extérieure (38) du porte-capteur (44), ou respectivement entre une surface extérieure (40) de la seconde bague d'étanchéité (34) et une surface extérieure (42) du tronc de montage (14) est réalisé plus grand que 90°.

2. Capteur selon la revendication 1, **caractérisé en ce que** le dispositif récepteur comprend un corps de serrage rotatif (54) avec au moins une surface de forme partiellement sphérique et un joint (56) en forme de champignon.

3. Capteur selon l'une des revendications précédentes,
**caractérisé en ce que** le tronc de montage (14) est réalisé de composants assemblés, et est réalisé en particulier d'une seule pièce.

4. Capteur selon l'une des revendications précédentes,
**caractérisé en ce que** le porte-capteur (44) est réalisé pour libérer et pour fixer le boîtier de capteur (12), de sorte que le boîtier de capteur (14) est interchangeable.

5. Capteur selon l'une des revendications précédentes, **caractérisé en ce que** le porte-capteur (44) comprend une fermeture à baïonnette pour recevoir le boîtier de capteur (12).

6. Capteur selon l'une des revendications précédentes 1 à 2 ou 4 à 5,
**caractérisé en ce que** le tronc de montage (14) et/ou le porte-capteur (44) sont réalisés de façon modulaire en plusieurs pièces

7. Capteur selon l'une des revendications précédentes, **caractérisé en ce que** le capteur est réalisé sous forme de barrière lumineuse à un seul sens, de barrière lumineuse à réflexion, ou de palpeur lumineux.
